# EUROPÄISCHE PATENTSCHRIFT

(11) **EP 2 937 202 B1**
(45) Veröffentlichungstag und Bekanntmachung des Hinweises auf die Patenterteilung: **15.08.2018**
(21) Anmeldenummer: 15164878.9
(22) Anmeldetag: 23.04.2015
(51) Int. Cl.: B29C 49/48

(54) **VORRICHTUNG UND VERFAHREN ZUM ERWÄRMEN VON KUNSTSTOFFVORFORMLINGEN**
METHOD AND DEVICE FOR HEATING PLASTIC PRE-FORMS
DISPOSITIF ET PROCÉDÉ DESTINÉS AU CHAUFFAGE D'ÉBAUCHES EN PLASTIQUE

(30) Priorität: 23.04.2014 DE 102014105675
(43) Veröffentlichungstag der Anmeldung: 28.10.2015
(73) Patentinhaber: Krones AG, 93073 Neutraubling (DE)
(72) Erfinder: Schönberger, Wolfgang, 93073 Neutraubling (DE)
(74) Vertreter: Bittner, Bernhard

(56) Entgegenhaltungen:
- EP-A2- 0 999 724
- WO-A1-2011/036593
- JP-A- 2004 306 510
- US-A- 4 605 839

## Beschreibung

Die vorliegende Erfindung bezieht sich auf eine Vorrichtung und ein Verfahren zum Erwärmen von Kunststoffvorformlingen. Im Stand der Technik ist es bekannt, dass sogenannte Kunststoffvorformlinge, insbesondere aus PET, zunächst in einem Ofen erwärmt werden und anschließend im Rahmen eines Blasvorgangs, insbesondere eines Streckblasvorgangs, zu Kunststoffbehältnissen umgeformt bzw. expandiert werden. Dabei werden bei der heute praktizierten Erwärmung der Kunststoffvorformlinge in Heizmodulen oftmals Infrarotstrahler mit dahinter liegenden Reflektoren (insbesondere in Form von Rippenkacheln) eingesetzt. Eine gezielte und intensive Erwärmung besonderer Bereiche, insbesondere eines Halsbereiches der Kunststoffvorformlinge, wird üblicherweise über eine zwischen den Strahlern und den Kunststoffvorformlingen positionierte Quarzglasscheibe realisiert. Dabei wird auch versucht, den Grundkörper der Kunststoffvorformlinge und den Mundstücksbereich hinsichtlich der auftreffenden Infrarotstrahlung zu trennen. Bei der nachfolgenden Umformung nämlich wird üblicherweise nur der Grundkörper expandiert und der Gewinde- oder Mündungsbereich belassen. Vielmehr ist es hinsichtlich dieses Mündungsbereiches sogar wünschenswert, dass dieser nicht allzu stark erwärmt wird, damit er bei dem nachfolgenden Umformungsvorgang nicht zerstört wird.

Mit anderen Worten müssen die genannten beiden Bereiche voneinander weitestgehend thermisch getrennt gehalten werden, um zum einen ein gezieltes Heizen des Grundkörpers des Kunststoffvorformlings zu erreichen und um zum anderen eine ungewollte Erwärmung des Mündungsbereiches zu verhindern. Bekannt sind aus dem Stand der Technik auch Parabol- und Ellipsenreflektoren, welche diese Problemstellung lösen können.

Durch eine im Stand der Technik bekannte annähernd kugelförmige bzw. kegelförmige Ausbreitung der IR-Strahlen gelangt trotz der oben näher beschriebenen Quarzglasscheiben noch ein sehr großer Strahlungsanteil in den Mündungsbereich der Kunststoffvorformlinge. Auch die heute im Einsatz befindliche Abschirmplatte kann diesen Effekt nicht gänzlich verhindern. Durch zu hohe Erwärmung des Mundstückbereichs kann, wie oben erwähnt, das Mundstück bei einem nachfolgenden Blasformprozess deformiert werden. Diese überflüssige und unnötig dort platzierte Strahlungsenergie bzw. Wärme muss auch wieder aufwendig und energetisch unvorteilhaft herausgekühlt werden, was beispielsweise über eine Mündungskühlung erfolgen kann.

Auch die bekannten Ellipsenreflektoren können diesen negativen Einfluss nicht gänzlich vermeiden, da diese zwar den Fokussierpunkt (d.h. den zweiten Brennpunkt der Ellipse) an der ersten Preformwandung platzieren, und die Strahlung exakt bündeln, jedoch diese in der zweiten Preformwandung wieder aufgefächert wird und somit wiederum die Mündung erwärmt. Reine Parabolreflektoren wiederum haben den Nachteil, dass diese sehr breit ausgeführt sein müssen und auch weniger fokussiern als reine Ellipsenreflektoren.

Aus der WO2011/036593A1 ist eine Erwärmungseinrichtung für Kunststoffvorformlinge mit einer Vielzahl von Infrarotlampen, welche jeweils in reflektiven Ausnehmungen angeordnet sind, bekannt. Die JP 2004305610 beschreibt ein Verfahren und eine Vorrichtung zum Erwärmen von Hohlkörpern wobei eine reflektierende Platte vorgesehen ist. Aus der EP 0999724A2 ist eine Lampen- und Reflektoranordnung zur Bestrahlung von Objekten bekannt, welche eine Kombination aus einer Infrarotlampe und einem Reflektor aufweist. Die US 4,605,839 offenbart eine Vorrichtung und ein Verfahren zum Erwärmen zweier Kunststoffvorformlinge.

Der vorliegenden Erfindung liegt daher die Aufgabe zugrunde, den Wirkungsgrad der Erwärmung der Kunststoffvorformlinge zu erhöhen oder zumindest beizubehalten, dabei jedoch auch das Auftreten von unerwünschten Erwärmungen, insbesondere im Mündungsbereich der Kunststoffvorformlinge, zu verhindern. Damit besteht die vorranginge Aufgabe der Erfindung in einer verbesserten, gezielten und weitgehend beinflussbaren Temperierung der Kunststoffvorformlinge, sodass deren Gewindebereich und deren Tragring nicht oder nur schwach erwärmt wird und bevorzugt dessen Halsbereich in möglichst definierter Weise erwärmt werden kann, um den der Erwärmung nachfolgenden Blasprozess möglichst exakt durchführen zu können.

Insbesondere, um einen sauberen Halsauszug zu gewährleisten, sollte eine konzentrierte, starke Erwärmung unterhalb des Tragrings vorgenommen werden, ohne dabei die Mündung zu sehr zu erwärmen. Diese Aufgabe wird erfindungsgemäß durch die Gegenstände der unabhängigen Patentansprüche erreicht. Vorteilhafte Ausführungsformen und Weiterbildungen sind Gegenstand der Unteransprüche.

Eine erfindungsgemäße Vorrichtung zum Erwärmen von Kunststoffvorformlingen weist eine Transporteinrichtung auf, welche die Kunststoffvorformlinge entlang eines vorgegebenen Transportpfades transportiert. Weiterhin weist die Vorrichtung eine Erwärmungseinrichtung auf, welche stationär bezüglich des Transportpfades der Kunststoffvorformlinge angeordnet ist, wobei die Erwärmungseinrichtung wenigstens eine erste Strahlungsquelle aufweist, welche Wärmestrahlung abgibt sowie wenigstens eine Reflektoreinrichtung, welche wenigstens einen Anteil der von der Strahlungsquelle abgegebenen Wärmestrahlung in Richtung der Kunststoffvorformlinge reflektiert.

Erfindungsgemäß weist die Reflektoreinrichtung einen ersten Abschnitt mit einem im Wesentlichen parabelförmig gekrümmten Profil auf sowie einen zweiten Abschnitt mit einem gekrümmten Verlauf, dessen Krümmung bzw. dessen Krümmungsverlauf (insbesondere dessen Krümmungsverlauf in Abhängigkeit von einer Längsrichtung der zu erwärmenden Kunststoffvorformlinge) sich von der Krümmung bzw. dem Krümmungsverlauf (insbesondere dessen Krümmungsverlauf in Abhängigkeit von einer Längsrichtung der zu erwärmenden Kunststoffvorformlinge) des ersten Abschnitts unterscheidet.

Bevorzugt ist der erste Abschnitt der Reflektoreinrichtung derart bezüglich der Strahlungsquelle und/oder den Kunststoffvorformlingen bzw. deren Transportpfad angeordnet, dass von diesem ersten Abschnitt reflektierte Strahlungsanteile unmittelbar auf die Kunststoffvorformlinge gelangen. Bevorzugt ist der zweite Abschnitt der Reflektoreinrichtung derart bezüglich der Strahlungsquelle und/oder den Kunststoffvorformlingen bzw. deren Transportpfad angeordnet, dass wenigstens ein Anteil der von diesem zweiten Abschnitt reflektierten Strahlung nicht unmittelbar auf die Kunststoffvorformlinge gelangt, sondern wenigstens ein weiteres Mal reflektiert wird und insbesondere wenigstens ein weiteres Mal an einem Bereich des ersten Abschnitts reflektiert wird. Daneben ist es jedoch auch möglich, dass auch wenigstens ein Anteil der von diesem zweiten Abschnitt reflektierten Strahlung unmittelbar auf die Kunststoffvorformlinge gelangt.

Es wird damit ein speziell angepasster Reflektor vorgeschlagen, der derart ausgestaltet ist, dass einerseits die entstehende Strahlung nahezu vollständig auf den Grundkörper bzw. die Bereiche unterhalb des Tragrings geführt werden kann, andererseits jedoch ein Auftreffen von Strahlung auf dem Gewindebereich weitestgehend verhindert wird. Es werden damit spezielle Reflektorformen mit der Kombination aus Parabol-, eventuell Ellipsen- und Kugelreflektoren sowie deren Anordnung zueinander erreicht. Durch eine geschickte Auslegung der Brennpunktlagen kann dadurch nahezu hundert Prozent der Strahlung in den Grundkörper des Vorformlings eingebracht werden.

Unter einem im Wesentlichen parabelförmigen Verlauf wird verstanden, dass dieser nicht notwendig exakt einem mathematisch parabelförmigen Verlauf entsprechen muss, sondern hiervon abweichen kann. Bekanntlich wird eine Parabel durch die Gleichung ax² + bx + c beschrieben. Unter einem im Wesentlichen parabelförmigen Verlauf wird verstanden, dass innerhalb der Parabel geringe Abweichungen hinsichtlich der Faktoren a und b sowie des Summanden c von beispielsweise bis zu 15%, bevorzugt bis zu 10%, bevorzugt bis zu 5% auftreten können. Auch muss die Parabel nicht exakt durch x² beschrieben werden, es wäre auch denkbar, dass anstelle des Exponenten 2 Exponenten zwischen 1,9 und 2,1, bevorzugt zwischen 1,95 und 2,05 verwendet werden. Auch wäre es möglich, dass der Verlauf der Krümmung auch durch einen Spline beschrieben wird, wobei auch Summanden bzw. Faktoren mit höherem Exponenten als 2 (etwa x³, x⁴, x⁵ und dergleichen) auftreten können (etwa in der Art einer Gleichung f(x) = ax⁵ + bx⁴ + cx³ + dx² + ex + f). Im Wesentlichen soll der Verlauf jedoch parabelförmig sein. Bevorzugt kann der hier beschriebene parabelförmige Verlauf in Abhängigkeit von der Längsrichtung der Kunststoffvorformlinge (bzw. in dieser Richtung verlaufende x-Werte der obigen Gleichung) definiert werden.

Weiterhin ist es möglich, dass sich die beiden Abschnitte unmittelbar aneinander anschließen. Daneben wäre es jedoch auch möglich, dass zwischen diesen Abschnitten ein (in der Transportrichtung der Kunststoffvorformlinge) geradliniger Abschnitt zwischen dem ersten Abschnitt und dem zweiten Abschnitt angeordnet ist.

Vorteilhaft weist die Transporteinrichtung eine Vielzahl von Halteelementen auf, welche die Kunststoffvorformlinge vereinzelt halten. Bei diesen Halteeinrichtungen kann es sich beispielsweise um Dorne handeln, welche in die Mündungen der Kunststoffvorformlinge eingreifen.

Bei einer weiteren vorteilhaften Ausführungsform weist die Transporteinrichtung auch Dreheinrichtungen auf, welche die Kunststoffvorformlinge während ihrer Erwärmung um ihre eigene Längsachse drehen. Auf diese Weise ist es auch möglich, im Wesentlichen die geometrische Lage bezüglich dem Kunststoffvorformling und den Erwärmungseinrichtungen einzuhalten und gleichwohl die Mündung der Kunststoffvorformlinge von der Erwärmung auszunehmen.

Vorteilhaft besteht der parabelförmige Verlauf in einer Ebene, zu welcher der Transportpfad der Kunststoffvorformlinge senkrecht steht. Damit entsteht der parabelförmige Verlauf bevorzugt in einer Ebene, in der sich auch die Längsrichtung der zu erwärmenden Kunststoffvorformlinge befindet. Dieser parabelförmige Verlauf erstreckt sich bevorzugt entlang des Transportpfades der Kunststoffvorformlinge. Bevorzugt erstrecken sich auch die Strahleinrichtungen in dieser Transportrichtung.

Bevorzugt handelt es sich bei der Wärmestrahlung um Infrarotstrahlung oder um Strahlung, welche zumindest infrarote Anteile enthält. Vorteilhaft enthält die Strahlung Anteile im nahinfraroten Bereich (NIR) und/oder Anteile im ferninfraroten Bereich (FIR).

Bei einer weiteren vorteilhaften Ausführungsform weist die Reflektoreinrichtung eine reflektive und insbesondere hochreflektive Oberfläche auf. Bevorzugt wirken damit die Reflektoren nicht diffus. Bevorzugt handelt es sich bei der Oberfläche der Reflektoreinrichtung, welche die Wärmestrahlung auf die Kunststoffvorformlinge reflektiert, um polierte und oder metallische Werkstoffe, die insbesondere aus einer Gruppe von Werkstoffen ausgewählt sind, welche Aluminium, Silber, Gold, Nickel, Stahl, Kupfer, Legierungen aus diesen Materialien und entsprechende Oberflächenbeschichtungen aufweist.

Durch die so beschriebene Reflektoreinrichtung ist es sowohl möglich, Wärmestrahlung von dem Mündungsbereich der Kunststoffvorformlinge abzuhalten als auch in Bereichen unterhalb des Tragrings Wärme einzubringen und so eine konzentrierte starke Erwärmung unterhalb des Tragrings zu erreichen, ohne dabei die Mündung zu sehr zu erwärmen. Daneben ergeben sich auch energetische Vorteile durch das gezielte Einbringen der Infrarotstrahlung in den Grundkörper des Kunststoffvorformlings.

Bei einer bevorzugten Ausführungsform befindet sich der erste Abschnitt näher an einer Wandung des Kunststoffvorformlings als der zweite Abschnitt. Falls also beispielsweise der Kunststoffvorformling aufrecht mit der Mündung nach oben transportiert wird, ist der erste Abschnitt in einer vertikalen Richtung unterhalb des zweiten Abschnitts angeordnet. Mit anderen Worten ist bevorzugt auch der zweite Abschnitt näher an dem Gewinde des Kunststoffvorformlings angeordnet. Bevorzugt werden die Kunststoffvorformlinge durch eine Transportgasse transportiert, wobei die hier beschriebenen Erwärmungseinrichtungen bevorzugt auf einer Seite dieser Transportgasse angeordnet sind. Bevorzugt sind noch weitere Reflektoreinrichtungen vorgesehen und die Kunststoffvorformlinge werden zwischen den hier beschriebenen Erwärmungseinrichtungen und diesen weiteren Reflektoreinrichtungen transportiert. Auf diese Weise kann Wärmestrahlung, welche die Kunststoffvorformlinge passiert hat, nochmals auf die Kunststoffvorformlinge reflektiert werden.

Bei einer weiteren vorteilhaften Ausführungsform ist die Transporteinrichtung derart ausgebildet, dass sie die Kunststoffvorformlinge mit deren Mündung nach oben transportiert. Dies ist zwar insoweit nachteilhaft, als in der Erwärmungseinrichtung entstehende Wärme auch noch oben strömt und eine gewisse Erwärmung der Mündungen bewirkt. Andererseits wäre es bei umgekehrter Auslegung erforderlich, dass entweder die Kunststoffvorformlinge oder die anschließend gefertigten Kunststoffflaschen zu einem späteren Zeitpunkt umgedreht werden müssen. Bevorzugt werden daher die Kunststoffvorformlinge vertikal stehend, mit der Mündung nach oben transportiert. Die Erfindung schließt einen umgekehrten Transport der Vorformlinge, mit der Mündung nach unten gerichtet, jedoch nicht aus.

Bei einer weiteren vorteilhaften Ausführungsform weist die Erwärmungseinrichtung eine zweite Strahlungsquelle auf, die in der Längsrichtung der zu erwärmenden Kunststoffvorformlinge versetzt zu der ersten Strahlungsquelle angeordnet ist. Damit befindet sich diese zweite Strahlungsquelle bei einem stehenden Transport unterhalb der ersten Strahlungsquelle. Auch diese zweite Strahlungsquelle dient damit bevorzugt zur Erwärmung des Grundkörpers der Kunststoffvorformlinge, wobei jedoch von dieser zweiten Strahlungsquelle bevorzugt keine Erwärmung des Mündungsbereiches der Kunststoffvorformlinge mehr zu befürchten ist und diese bereits nicht mit ihrer Strahlung die direkt unterhalb des Tragrings liegenden Bereiche der Kunststoffvorformlinge erreicht.

Bei einer weiteren vorteilhaften Ausführungsform weist die Erwärmungseinrichtung auch eine zweite Reflektoreinrichtung auf, welche wenigstens einen Anteil der von der zweiten Strahlungsquelle ausgehenden Wärmestrahlung auf den Kunststoffvorformling bzw. die Kunststoffvorformlinge reflektiert. Vorteilhaft handelt es sich auch bei der zweiten Strahlungsquelle um eine Strahlungsquelle, die sich entlang der Transportrichtung der Kunststoffvorformlinge erstreckt. Dabei weist bevorzugt diese zweite Reflektoreinrichtung im Vergleich zu der ersten Reflektoreinrichtung anders gekrümmte Bereiche auf. So könnte beispielsweise die zweite Reflektoreinrichtung als rein parabolförmiger Reflektor mit nur einer parabelförmigen Krümmung ausgebildet sein.

Bei einer weiteren vorteilhaften Ausführungsform ist die Strahlungsquelle in einem Brennpunkt wenigstens eines der beiden Abschnitte der Reflektoreinrichtung angeordnet. Auf diese Weise kann eine sehr präzise Reflektion der Strahlung zumindest von dieser Reflektoreinrichtung auf die Kunststoffvorformlinge erreicht werden.

Bei einer weiteren vorteilhaften Ausführungsform ist die Strahlungsquelle auch im Brennpunkt wenigstens eines weiteren Abschnitts der Reflektoreinrichtung bzw. des anderen Abschnitts der Reflektoreinrichtung angeordnet.

In den Figuren wird genauer erläutert, wie eine derartige Strahlungsquelle angeordnet sein kann, wobei insbesondere deren geometrische Ausdehnung berücksichtigt werden kann.

Bei einer weiteren vorteilhaften Ausführungsform weist der erste Abschnitt der Reflektoreinrichtung die Gestalt einer Halbparabel auf. Damit handelt es sich bevorzugt um eine parabelförmige Struktur, welche in einem vorgegebenen Ursprungspunkt beginnt und sich anschließend insbesondere in der Längsrichtung des Kunststoffvorformlings beispielsweise in Richtung auf die Mündung des Kunststoffvorformlings hin parabelförmig erstreckt.

Bei einer weiteren vorteilhaften Ausführungsform weist auch der zweite Abschnitt einen im Wesentlichen parabelförmig gekrümmten Verlauf auf. Dabei kann sich jedoch bevorzugt die Steigung innerhalb des zweiten Abschnitts von der Steigung des ersten Abschnitts unterscheiden. Bevorzugt weist der erste Abschnitt eine größere Steigung auf, als der zweite Abschnitt. Bevorzugt weist die die Steigung des ersten Abschnitts wenigstens 1,5 mal so hoch wie die Steigung des zweiten Abschnitts, bevorzugt wenigstens 2 mal so hoch und bevorzugt wenigstens 3 mal so hoch.

Es wäre jedoch auch möglich, dass der zweite Abschnitt einen nicht parabelförmigen Verlauf einnimmt, beispielsweise einen elliptischen Verlauf oder einen kreisförmigen Verlauf.
Bei einer weiteren vorteilhaften Ausführungsform weist auch der zweite Abschnitt die Gestalt einer Halbparabel auf. Bei dieser Ausgestaltung ist also sowohl der erste Abschnitt als auch der zweite Abschnitt als Halbparabel ausgebildet. Auf diese Weise kann der benötigte Bauraum verringert werden. So kann beispielsweise der erste halbparabelförmig ausgebildete Abschnitt (bei mit der Mündung nach oben transportierten Kunststoffvorformlingen) zumindest teilweise und bevorzugt vollständig oberhalb der Strahlungsquelle ausgebildet sein. Auch der zweite Abschnitt kann sich zumindest in einem oberen Bereich der Strahlungsquelle erstrecken bzw. oberhalb eines geometrischen Mittelpunkts der Strahlungsquelle.

Daneben können auch Kombinationen aus diesen Verläufen insoweit vorgesehen sein, als Unterabschnitte gebildet werden, welche teilweise elliptische und teilweise kreisförmige Verläufe annehmen.

Bei einer weiteren vorteilhaften Ausführungsform weist die Reflektoreinrichtung einen dritten Abschnitt auf, dessen Krümmungsverlauf sich von den Krümmungsverläufen der ersten und zweiten Abschnitte unterscheidet. Dieser dritte Abschnitt kann dabei wiederum gezielt ein Eindringen von Wärme in Bereiche direkt unterhalb des Tragrings der Kunststoffvorformlinge erreichen.

Bei einer weiteren vorteilhaften Ausführungsform weist wenigstens eine Reflektoreinrichtung eine Öffnung auf, durch welche Strahlung austreten kann. Dabei ist es möglich, dass durch diese Öffnung Strahlung auf eine weitere Reflektoreinrichtung auftrifft. Vorteilhaft erstreckt sich dabei diese Öffnung entlang des Verlaufs wenigstens eines Reflektorabschnitts. Bevorzugt ist diese Öffnung derart angeordnet, dass durch diese hindurchtretende Strahlung nicht unmittelbar auf den Kunststoffvorformling trifft sondern bevorzugt noch auf einen weiteren reflektierenden Abschnitt, insbesondere einen weiteren Abschnitt der Reflektoreinrichtung. Vorteilhaft wird die besagte Öffnung von zwei Unterabschnitten des gleichen Abschnitts der Reflektoreinrichtung begrenzt. So ist es möglich, dass der erste Abschnitt bis zu einem bestimmten Punkt der Reflektoreinrichtung reicht, sich in diesem Punkt die Öffnung anschließt und nach der Öffnung sich der erste Abschnitt wieder weiter erstreckt. Beispielsweise kann die Erwärmungseinrichtung wenigstens eine erste Strahlungsquelle aufweisen, welche Wärmestrahlung abgibt, sowie wenigstens eine Reflektoreinrichtung, welche wenigstens einen Anteil der von der ersten Strahlungsquelle abgegebenen Wärmestrahlung in Richtung der Kunststoffvorformlinge reflektiert. Weiterhin kann die Erwärmungseinrichtung wenigstens eine zweite Strahlungsquelle aufweisen, welche in der Längsrichtung der Vorformlinge versetzt zu der ersten Strahlungsquelle angeordnet ist, sowie eine zweite Reflektoreinrichtung, welche wenigstens einen Anteil der von der zweiten Reflektoreinrichtung ausgehenden Wärmestrahlung in Richtung der Kunststoffvorformlinge reflektiert.
Bevorzugt weist die Reflektoreinrichtung einen ersten Abschnitt mit einem im Wesentlichen parabelförmig gekrümmten Verlauf auf, sowie einen zweiten Abschnitt mit einem gekrümmten Verlauf, dessen Krümmung und/oder Krümmungsverlauf sich von der Krümmung und/oder dem Krümmungsverlauf des ersten Abschnitts unterscheidet.
Weiterhin ist bevorzugt die Reflektoreinrichtung in der oben beschriebenen Weise ausgeführt.
Die vorliegende Erfindung ist weiterhin auf ein Verfahren zum Erwärmen von Kunststoffvorformlingen gerichtet, wobei Kunststoffvorformlinge mittels einer Transporteinrichtung entlang eines Transportpfades transportiert und während dieses Transports von einer Erwärmungseinrichtung erwärmt werden. Dabei weist die Erwärmungseinrichtung wenigstens eine erste Strahlungsquelle auf, welche Wärmestrahlung zum Erwärmen der Kunststoffvorformlinge abgibt sowie wenigstens eine Reflektoreinrichtung, welche wenigstens einen Anteil der von der ersten Strahlungsquelle abgegebenen Strahlung auf die Kunststoffvorformlinge reflektiert.
Erfindungsgemäß reflektiert die Reflektoreinrichtung die Wärmestrahlung wenigstens mittels eines ersten Abschnitts mit einem im Wesentlichen parabelförmig gekrümmten Verlauf sowie mittels eines zweiten Abschnitts mit einem gekrümmten Verlauf, dessen Krümmung oder Krümmungsverlauf sich von der Krümmung oder dem Krümmungsverlauf des ersten Abschnitts unterscheidet, auf die Kunststoffvorformlinge.

Es wird daher auch verfahrensseitig vorgeschlagen, dass die Reflektion der Strahlung durch die oben beschriebenen Reflektoreinrichtungen erfolgt. Vorteilhaft reflektiert die Reflektoreinrichtung Strahlung in Bereiche des Kunststoffvorformlings, welche sich in dem Grundkörper oder an dem Außenumfang des Grundkörpers des Kunststoffvorformlings befinden, bevorzugt auch in Bereiche, welche sich unmittelbar unterhalb eines Tragrings befinden, bevorzugt jedoch im Wesentlichen nicht in Bereiche, welche sich oberhalb des Tragrings befinden oder in dem Tragring selbst.

Durch die hier beschriebenen Vorgehensweisen kann eine gezielte und bevorzugt auch beeinflussbare Temperierung bzw. Erwärmung der Kunststoffvorformlinge erreicht werden, wobei insbesondere die Gewindebereiche und Tragringe nicht oder nur schwach erwärmt werden und andererseits unterhalb des Tragrings liegende Halsbereiche in möglichst definierter Weise erwärmt werden können, um so den bevorzugt auf den Erwärmungsvorgang folgenden Blasprozess möglichst exakt durchführen zu können. Um nämlich einen sauberen Halsauszug zu gewährleisten, muss eine konzentrierte starke Erwärmung unterhalb des Tragrings vorgenommen werden, ohne dabei die Mündung selbst zu stark zu erwärmen.

Weitere Vorteile und Ausführungsformen ergeben sich aus den beigefügten Zeichnungen. Darin zeigen:
- Fig. 1: Eine Vorrichtung zum Erwärmen von Kunststoffvorformlingen;
- Fig. 2a: eine Darstellung der Erwärmung der Kunststoffvorformlinge nach dem Stand der Technik;
- Fig. 2b: eine Detaildarstellung der in Fig. 2a gezeigten Erwärmung;
- Fig. 3: eine weitere Darstellung einer Erwärmung nach dem Stand der Technik;
- Fig. 4a: eine Darstellung einer Erwärmung mit einer erfindungsgemäßen Reflektoreinrichtung;
- Fig. 4b: eine Detaildarstellung der in Fig. 4a gezeigten Reflektoreinrichtung;
- Fig. 5: eine weitere Ausführungsform einer erfindungsgemäßen Reflektoreinrichtung;
- Fig. 6a, 6b: zwei weitere Ausführungsformen einer erfindungsgemäßen Reflektoreinrichtung;
- Fig. 7: eine weitere Ausgestaltung einer erfindungsgemäßen Reflektoreinrichtung;
- Fig. 8: eine Darstellung der in Fig. 7 gezeigten Reflektoreinrichtung in einer Erwärmungseinrichtung; und
- Fig. 9: eine weitere sehr bevorzugte Ausgestaltung einer Reflektoreinrichtung.

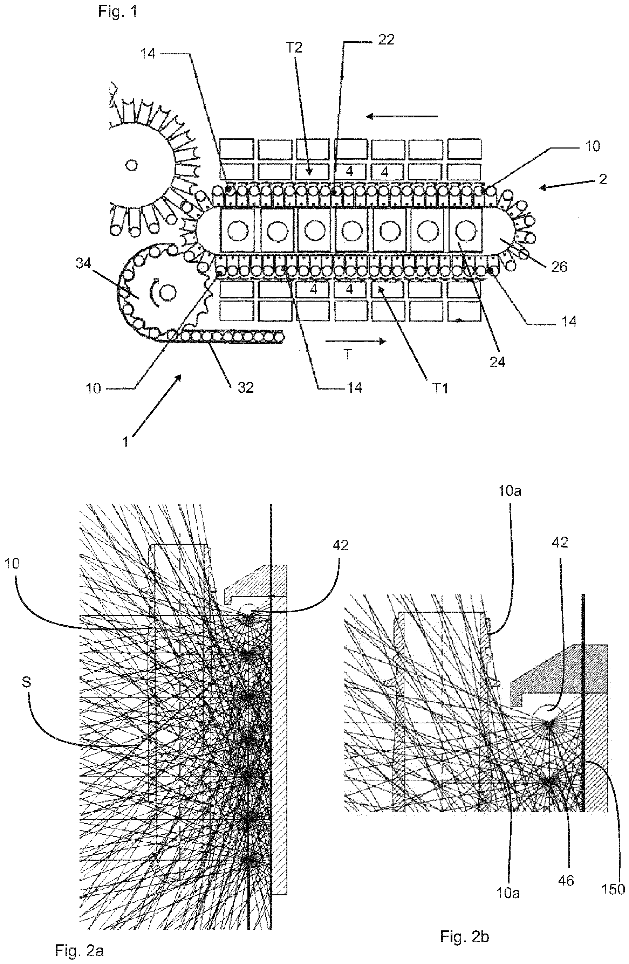

Fig. 1 zeigt eine schematische Darstellung einer erfindungsgemäßen Vorrichtung 1. Dabei werden Kunststoffvorformlinge 10 über eine Zuführeinrichtung 32 zunächst einer Vereinzelungseinrichtung 34, wie insbesondere, aber nicht ausschließlich, einem Sägezahnstern zugeführt und dort vereinzelt. Anschließend werden die so vereinzelten Kunststoffvorformlinge 10 der eigentlichen Erwärmungseinrichtung d.h. der Vorrichtung 1 übergeben und dabei einer Vielzahl von Halteeinrichtungen 14 transportiert. Diese Halteeinrichtungen 14 können dabei, wie oben erwähnt, Dorne sein bzw. aufweisen, welche in die Mündungen der Kunststoffvorformlinge 10 eingreifen.

Die Bezugszeichen 4 beziehen sich jeweils auf Erwärmungseinrichtungen, die entlang des Transportpfades T bzw. dessen Teilpfade seitlich bezüglich der so geförderten Kunststoffvorformlinge angeordnet sind. Das Bezugszeichen 22 kennzeichnet grob schematisch eine Dreheinrichtung, welche eine Drehung der Kunststoffvorformlinge 10 um ihre eigene Längsachse bewirkt.

Das Bezugszeichen 2 bezieht sich in seiner Gesamtheit auf eine Transporteinrichtung, welche die Kunststoffvorformlinge auf einem Transportpfad T bzw. dessen Teilpfaden T1 und T2 fördert. Das Bezugszeichen 26 kennzeichnet eine Umlenkeinrichtung, wie ein Umlenkrad, um welche die Kunststoffvorformlinge 10 herumgeführt werden. Insgesamt werden die Kunststoffvorformlinge daher abschnittsweise entlang geradliniger Bahnen transportiert.

Die Figuren 2a und 2b zeigen zwei Reflektoreinrichtungen nach dem Stand der Technik. Diese Reflektoreinrichtungen weisen dabei einen geraden Abschnitt 150 auf (siehe Fig. 2b). Damit ist hier eine Vielzahl von Strahlungseinrichtungen bzw. Strahlungsquellen 42 sowie dahinter liegende Reflektoren vorgesehen. Man erkennt in den Darstellungen von Fig. 2a und Fig. 2b, dass ein Großteil der Strahlung S an dem Grundkörper des Kunststoffvorformlings vorbei und auch in die Mündung und in den Bodenbereich strahlt und somit verlorengeht.

Aus diesem Grunde werden im Stand der Technik ebenfalls Parabelreflektoren verwendet. Diese nach dem Stand der Technik eingesetzten einfachen Parabelreflektoren weisen jedoch den Nachteil auf, dass der Parabelschirm, bzw. der Reflektor, sehr weit über den eigentlichen Strahler bzw. die Strahlungseinrichtung gezogen werden muss, um die Strahlung aufzufangen und gerichtet nach vorne zu reflektieren.

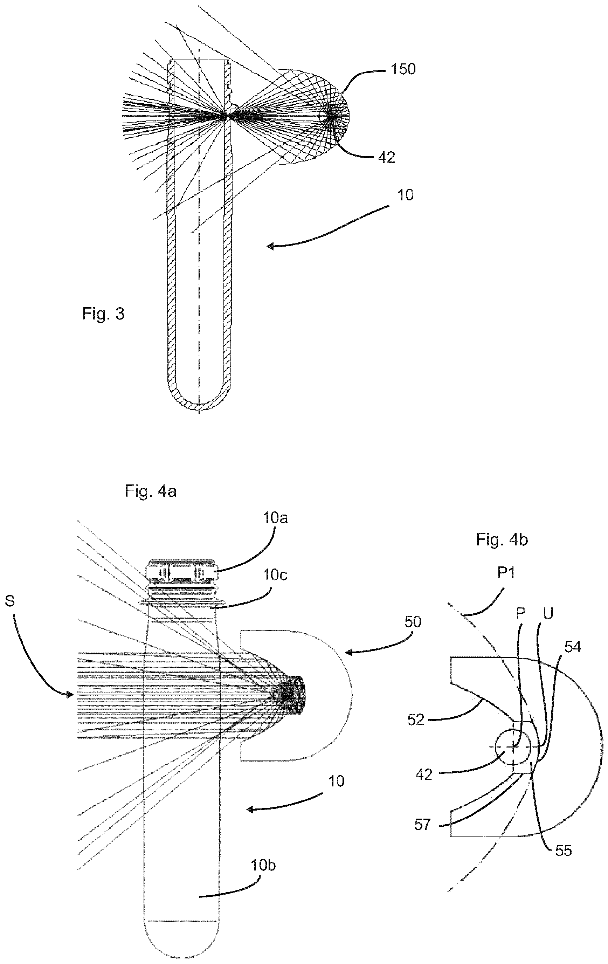

Auf diese Weise wird jedoch die Bauhöhe (bedingt durch die Breite der Parabel) sehr groß, was dann nur eine geringe Anzahl von Strahlern zulässt und somit die Energiedichte absenkt. Weiter sind aus dem Stand der Technik Ellipsenreflektoren bekannt, welche die Strahlung im zweiten Brennpunkt der Ellipse bündeln (vgl. Fig. 3). Auf diese Weise kann die Strahlung sehr gut auf einen Punkt fokussiert werden. Meist wird dieser Punkt auf die erste Preformwandung gerichtet. Nachteilig zeigt sich aber auch hier, dass beim Durchgang durch die zweite Preformwandung die Strahlen wieder auffächern und hierdurch besonders stark der Tragring der Mündung ungewollt erwärmt wird.

Die Figuren 4a und 4b zeigen eine erste Ausführungsform einer erfindungsgemäßen Reflektoreinrichtung 50. Man erkennt, dass die Strahlungen S gut auf den Grundkörper 10b des Kunststoffvorformlings gerichtet sind und nur wenig Strahlung den Mündungsbereich 10a des Kunststoffvorformlings trifft.

Fig. 4b zeigt eine Detaildarstellung der in der Fig. 4a gezeigten Reflektoreinrichtung. Man erkennt hier einen ersten Abschnitt 52, der parabelförmig ausgebildet ist sowie einen zweiten Abschnitt 54, der ebenfalls parabelförmig ausgebildet ist, dabei jedoch eine geringere Parabelsteigung aufweist. Diese beiden kombinierten Parabeln weisen jedoch den gleichen Brennpunkt P auf, in dem die Strahlungseinrichtung bzw. Strahlungsquelle 42 angeordnet ist. Das Bezugszeichen 55 kennzeichnet eine Ausnehmung bezüglich des ersten Abschnitts 52, in welche die Strahlungseinrichtung 42 teilweise eingesenkt ist. Auf diese Weise kann auch der tatsächlichen Ausdehnung der Strahlungseinrichtung Rechnung getragen werden. Damit sind hier zwei kombinierte Parabeln mit einer gleichen Brennpunktlage dargestellt.

Der Vorteil gegenüber einer einfachen Parabel bzw. gegenüber einem Parabolinnenreflektor ist hier, dass bei einer sehr schmalen Ausführungsform die Strahlung mit einer guten Energiedichte in Richtung des Grundkörpers des Kunststoffvorformlings geleitet werden kann. Die gestrichelte Linie P1 zeigt den theoretischen Parabelverlauf des zweiten Abschnitts 54. Das Bezugszeichen 57 kennzeichnet einen zwischen den beiden Abschnitten 52 und 54 verlaufenden Wandabschnitt, der sich damit bevorzugt senkrecht zu einer Ebene erstreckt, welche von der Transportrichtung der Kunststoffvorformlinge und deren Längsrichtung aufgespannt wird. Auch dieser Wandungsabschnitt besteht bevorzugt aus einem reflektiven Material.

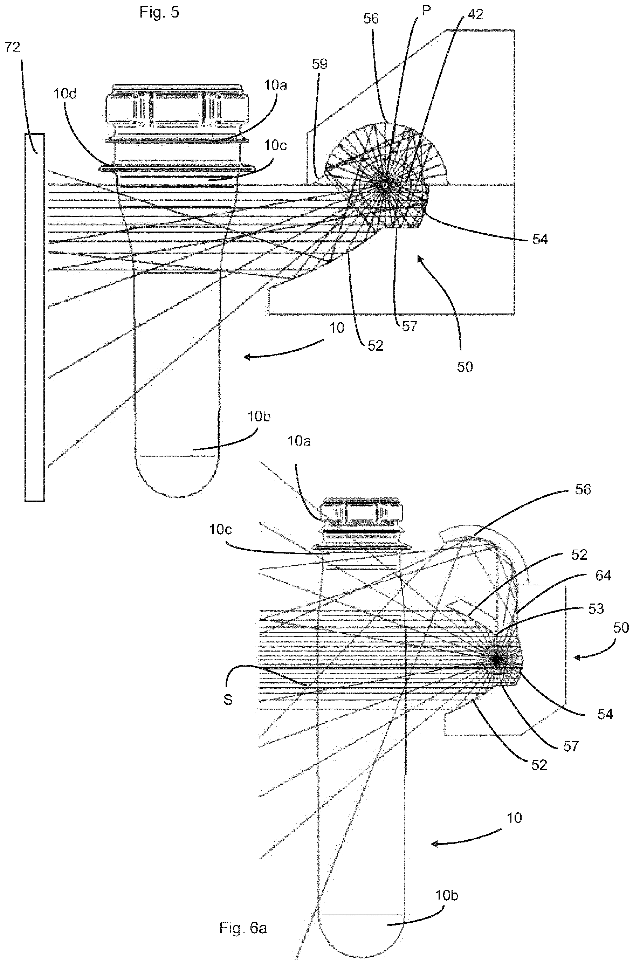

Fig. 5 zeigt eine weitere Ausführungsform einer erfindungsgemäßen Reflektoreinrichtung. Bei dieser Ausführungsform ist ebenfalls der erste parabelförmige Abschnitt 52 mit dem zweiten hier parabelförmigen Abschnitt 54 kombiniert, wie auch in Fig. 4b gezeigt. Allerdings sind hier bloß Halbparabeln vorhanden. Das Bezugszeichen 57 kennzeichnet wieder die Stufe zwischen den beiden parabelförmigen Abschnitten, welche auch bei der in Fig. 4b gezeigten Ausführungsform vorhanden ist. Die Höhe dieser Stufe ergibt sich auch aus den Steigungen der beiden Parabeln bzw. den sich rechnerisch ergebenden Koordinaten in dem X-Abschnitt bzw. dem Längenabschnitt des Kunststoffvorformlings an dem Bereich der Stufe 57, so dass die Brennpunkte beider Abschnitte zusammenfallen.

Weiter weist die in der Fig. 5 gezeigte Ausführungsform einen dritten Abschnitt 56 auf, der hier eine kugelförmige Oberfläche bzw. Struktur aufweist. Genauer gesagt ist der dritte Abschnitt hier halbkugelförmig ausgeführt. Daneben ist am Ende dieses Reflektors noch ein stufenförmiger Abschnitt 59 vorgesehen, der bezüglich einer gedachten Tangente an dem kugelförmigen Abschnitt in einem Winkel verläuft, der zwischen 30° und 60° liegt. Die Strahlen, welche an der Wandung des Abschnitts 56 reflektiert werden, können dabei wieder durch die Strahlungseinrichtung 42 bzw. deren Filament reflektiert werden und so auf den ersten Abschnitt 52 reflektiert werden, von wo sie aus zu den Kunststoffvorformlingen 10 gelangen.

Das Bezugszeichen 72 bezieht sich auf einen weiteren Reflektor, der bezüglich der Reflektoreinrichtung 50 hinter den Kunststoffvorformlingen 10 angeordnet ist. Dieser weitere Reflektor 72 reflektiert Strahlung, welche die Kunststoffvorformlinge passiert, wieder auf diese.

Der Vorteil dieser Kombination aus den beiden parabelförmigen Abschnitten mit einem Kugelspiegel, dessen Zentren bevorzugt wiederum genau in der Brennpunktlage P der beiden Parabeln liegt, ist, dass hiermit das Strahlerfeld um die Hälfte verschmälert werden kann und gleichzeitig die Energiedichte der Strahlung annähernd verdoppelt wird. Durch den hier oben liegenden Kugelspiegel bzw. den Kugelreflektor wird die Strahlung wieder zum Mittelpunkt des Strahlers zurückreflektiert. Ein Großteil der Strahlung geht hier durch die Strahlungseinrichtung 42 (insbesondere deren Filament hindurch) und gelangt so auf den Parabelreflektoren 52, der die Strahlung nach vorne auf den Kunststoffvorformling richtet. Durch diese Vorgehenswiese kann auch der Bereich 10c, der sich unterhalb des Tragrings 10b des Kunststoffvorformlings befindet, günstig erwärmt werden.

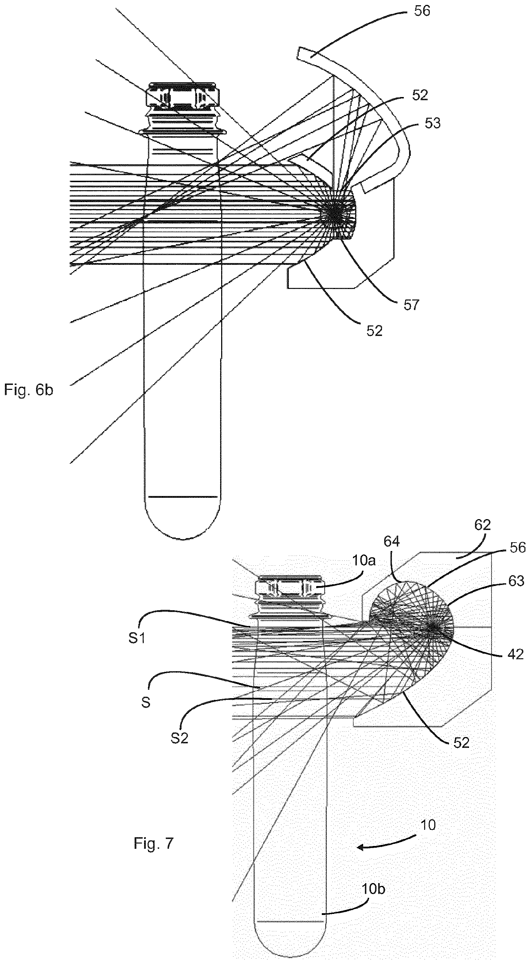

Die Figuren 6a und 6b zeigen weitere Ausführungsformen mit einer Reflektoreinrichtung 50. Bei dieser Ausführungsform ist ebenfalls ein erster Abschnitt 52 und ein zweiter Abschnitt 54 vorgesehen, die jeweils parabelförmig ausgestaltet sind. Zusätzlich weist jedoch der erste Abschnitt eine Öffnung bzw. Lücke auf, durch welche Strahlung auf einen dritten Abschnitt 56 und bei der Ausführungsform nach Fig. 6a auch auf einen geraden Abschnitt 64 treten kann. Einen Nachteil der in den obigen Ausführungsformen gezeigten Kombinationen über zwei oder mehrere Parabeln (Parabelschar) liegt darin, dass die Brennpunktlage immer identisch sein muss, um die Strahlung gerichtet nach vorne (d.h. auf die Kunststoffvorformlinge) zu bringen.

Aus diesem Grunde liegen die Ursprungspunkte der kombinierten Parabeln immer versetzt zueinander, was bedeutet, dass sich die Parabeln nicht miteinander schneiden. Um jedoch die Parabeln sinnvoll miteinander zu verbinden, ist eine Gerade vorteilhaft, die keine Strahlung in Richtung des Kunststoffvorformlings bringt (d.h. der Abschnitt 57). Dieser Strahlungsanteil würde im Reflektor vernichtet werden. Um jedoch auch diesen Anteil noch energetisch nutzen zu können, wurden hier Öffnungen bzw. Langlöcher 53 in den rinnenförmigen Reflektor bzw. den Abschnitt 52 eingearbeitet.

Dadurch kann der innere und äußere Reflektor (äußere Reflektoren 56, 64) miteinander verbunden werden und gleichzeitig kann die sonst verlorene Strahlung durch das Langloch hindurch auf den außenliegenden Reflektorabschnitt 56 treffen und ebenso auf die Kunststoffvorformlinge 10 gelangen. Während bei der in Fig. 6A gezeigten Ausführungsform der dritte Abschnitt 56 kugelförmig ausgebildet ist, ist dieser Abschnitt 56 bei der in Fig. 6B gezeigten Darstellung ellipsenförmig ausgebildet. Es wäre jedoch auch möglich, dass dieser dritte Abschnitt 56 ebenfalls parabelförmig ausgebildet ist.

Fig. 7 zeigt eine weitere Ausführungsform, die alle drei Komponenten, Kugelspiegelreflektor (Abschnitt 64), Ellipsenreflektor (Abschnitt 56) und auch Parabolreflektor (Abschnitt 52) zusammen in idealer Weise vereinigt. Bei dieser Ausführungsform ist die Reflektoreinrichtung vorteilhaft zweiteilig ausgebildet. Der obere Teil 62 ist hier vorteilhaft als Kühlschild ausgestattet und arbeitet zugleich als Fokussierreflektor. Über den ellipsenförmigen Anteil 63 der Reflektoreinrichtung wird die Strahlung in der ersten Wand des Kunststoffvorformlings gebündelt. Diese geht dann (vgl. Bezugszeichen S1) nach unten in Richtung des Kunststoffvorformlingsgrundkörpers durch, die zweite Wandung des Kunststoffvorformlings und nicht durch den Tragring oder in die Mündung 10a.

Der Strahlungsanteil, der durch einen einfachen offenen Ellipsenreflektor (Abschnitt 56) entsteht, wird über einen Kugelspiegelabschnitt 64 (im oberen linken Bereich) durch die Strahlungseinrichtung 42 hindurch wieder auf die Parabelseite bzw. den ersten Abschnitt 52 gelenkt. Der parabelförmige Abschnitt 52 befindet sich wieder im unteren Teil des der zweigeteilten Reflektoreinrichtung und dieser richtet nun die durch die Kugelspiegel erhöhte Strahlungsdichte direkt zur Wandung des Kunststoffvorformlings, wie durch den Strahlungsanteil S2 gezeigt. Bevorzugt liegen hierbei die jeweiligen Mittelpunkte bzw. Brennpunktlagen der einzelnen Reflektoranteile bzw. der Abschnitte 52, 56 und 64 mit dem Mittelpunkt der Strahlungseinrichtung 42 geometrisch in dem gleichen Punkt bzw. auf der gleichen Linie, welche sich bevorzugt entlang des Transportpfades der Kunststoffvorformlinge erstreckt.

Mit dieser Auslegung ist es möglich, nahezu 100% der erzeugten Strahlung auf den Grundkörper 10b des Kunststoffvorformlings 10 zu leiten. Daneben ist auch bei einer sehr kleinen und günstigen Baugröße der Reflektoreinrichtung möglich, Strahlung in hoher örtlicher Gleichmäßigkeit direkt unter dem Tragring zu platzieren. Dies kann dabei auch erfolgen, ohne den Mündungsbereich 10a nachteilig zu erwärmen.

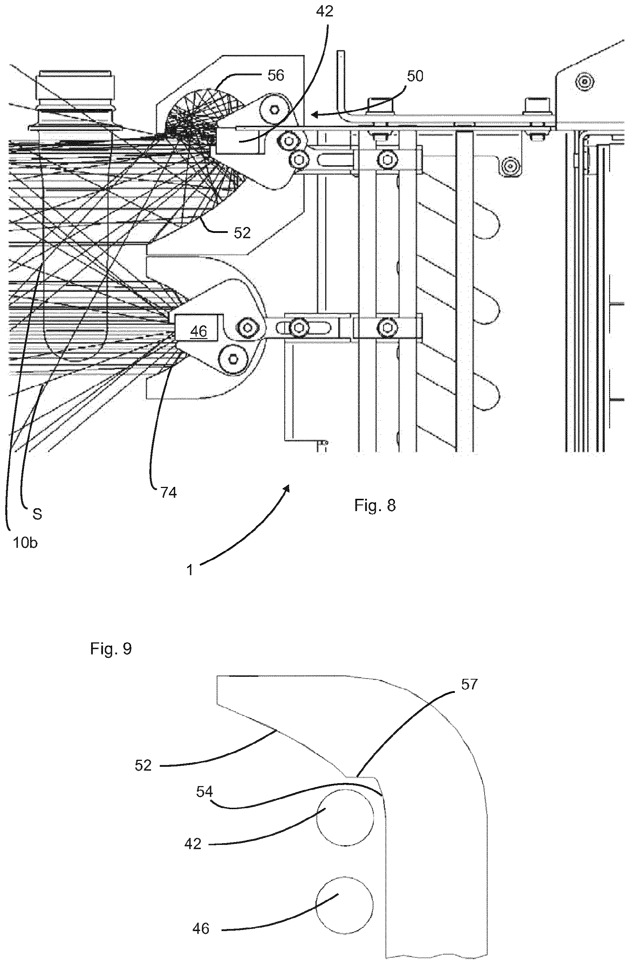

Fig. 8 zeigt eine Einbausituation der Reflektoreinrichtung 50 aus Fig. 7 in eine Erwärmungseinrichtung 1. Dabei ist unterhalb der ersten Strahlungseinrichtung 42 eine zweite Strahlungseinrichtung 46 angeordnet, welche hier innerhalb eines Parabolspiegels 74 angeordnet ist. Die Strahlungsanteile, die nach oben schräg austreten, treffen jedoch ebenfalls auch auf den Grundkörper 10b des Kunststoffvorformlings. Auf diese Weise wäre es beispielsweise möglich auch die oben gezeigten Ausführungsformen miteinander zu kombinieren. So kann zum Beispiel die in Fig. 7 gezeigte Ausführungsform mit der in Fig. 2b gezeigten Ausführungsform kombiniert werden, wobei die erstgenannte Ausführungsform den Halsbereich des Kunststoffvorformlings erwärmt und die in Fig. 2b gezeigte Ausführungsform den Kuppenbereich des Kunststoffvorformlings erwärmt.

Daneben können jedoch auch die anderen in den Figuren gezeigten Ausführungsformen miteinander kombiniert werden, wobei hier nur beispielhaft eine Kombination aus der in Fig. 7 gezeigten Ausführungsform mit der in Fig. 3 gezeigten Ausführungsform oder eine Kombination der in Fig. 4 gezeigten Ausführungsform mit der in Fig. 2B gezeigten Ausführungsform genannt wird. Daneben wäre es möglich dass entlang des Transportpfades mehrere der hier beschriebenen Erwärmungseinrichtungen bzw. Reflektoreinrichtungen angeordnet sind, welche auch bezüglich einander unterschiedliche Ausgestaltungen aufweisen können, um entlang des Transportpfades der Kunststoffvorformlinge eine unterschiedliche Profilierung der Erwärmung zu erreichen. Auch kann eine einzelne Reflektoreinrichtung entlang des Transportpfades der Kunststoffvorformlinge ein sich änderndes Oberflächenprofil aufweisen.

Daneben kann die Erwärmungseinrichtung auch zusätzlich noch ein Abschirmelement aufweisen, welches Wärmestrahlung von den Kunststoffvorformlingen 10 abhält, etwa in Form der eingangs beschriebenen Quarzglasscheibe oder einer Abschirmplatte.

Zusätzlich kann durch eine geeignete Anordnung der Strahlungseinrichtungen ein gleichmäßig erwärmter Kunststoffvorformling am Ende eines Heizprozesses exakt und in kürzester Zeit profiliert werden. Dies bedeutet, dass bestimmte Bereiche des Kunststoffvorformlings stärker erwärmt werden können als andere, um diese in einem nachfolgenden Streckblasprozess stärker zu dehnen. Vergleicht man die Strahlengänge der obigen Abbildungen mit den Strahlengängen aus dem Stand der Technik, so zeigt sich eindeutig, dass sowohl die Profilierung als auch das energetische Verhalten deutlich verbessert werden. Insbesondere ist damit ein verbesserter Halsauszug bei einer konzentrierten starken Erwärmung, insbesondere unterhalb des Tragrings, möglich, ohne dabei die Mündungsbereiche 10a der Kunststoffvorformlinge zu sehr zu erwärmen. Daneben ergeben sich, wie oben erwähnt, energetische Vorteile durch gezieltes Einbringen der Infrarotstrahlung in den Grundkörper 10b der Kunststoffvorformlinge.

Fig. 9 zeigt eine weitere sehr bevorzugte Ausgestaltung einer Reflektoreinrichtung. Bei dieser Ausgestaltung sind sowohl der erste Abschnitt 52 als auch der zweite Abschnitt 54 jeweils als Halbparabeln ausgebildet. Der erste Abschnitt 52 ist hier oberhalb der Strahlungseinrichtung 42 angeordnet. Der erste Abschnitt 52 könnte jedoch auch (zumindest teilweise) unterhalb der ersten Strahlungseinrichtung 42 angeordnet sein. Daneben ist zwischen den beiden Abschnitten 52 und 54 wieder eine Stufe 57 angeordnet, die sich senkrecht zu der Längsrichtung der Kunststoffvorformlinge erstreckt. Man erkennt, dass die Parabelsteigung des zweiten Abschnitts 54 wesentlich geringer ist als die Parabelsteigung des ersten Abschnitts. Der Scheitelpunkt des zweiten Abschnitts liegt hier bevorzugt auf der Höhe eines geometrischen Mittelpunkts der Strahlungseinrichtung.

### Bezugszeichenliste

- 1: Vorrichtung, Erwärmungseinrichtung
- 2: Transporteinrichtung
- 4: Erwärmungseinrichtungen
- 10: Kunststoffvorformlinge
- 10a: Mündungsbereich
- 10b: Grundkörper
- 10c: Bereich unterhalb des Tragrings
- 14: Halteeinrichtungen
- 22: Dreheinrichtung
- 26: Umlenkeinrichtung
- 32: Zuführungseinrichtung
- 34: Vereinzelungseinrichtung
- 42: erste Strahlungseinrichtung / Strahlungsquelle
- 46: zweite Strahlungseinrichtung
- 50: Reflektoreinrichtung
- 52: erster Abschnitt
- 53: Langlöcher
- 54: zweiter Abschnitt
- 55: Ausnehmung / Stufe
- 56: dritter Abschnitt /äußerer Reflektor
- 57: Stufe
- 59: stufenförmiger Abschnitt
- 62: oberer Teil
- 63: ellipsenförmiger Anteil
- 64: gerader Abschnitt / äußerer Reflektor /Kugelspiegelabschnitt
- 72: weiterer Reflektor
- 74: Parabolspiegel
- 150: gerader Abschnitt
- T: Transportpfad
- T1, T2: Teilpfade
- S: Strahlung
- S1, S2: Strahlungsanteil
- P: Brennpunkt
- P1: gestrichelte Linie
- U: Punkt

## Patentansprüche

1. Vorrichtung (1) zum Erwärmen von Kunststoffvorformlingen (10), mit einer Transporteinrichtung (2), welche die Kunststoffvorformlinge (10) entlang eines vorgegebenen Transportpfades (T) transportiert, und mit wenigstens einer Ewärmungseinrichtung (4), welche stationär bezüglich des Transportpfads der Kunststoffvorformlinge (10) angeordnet ist, wobei die Erwärmungseinrichtung (4) wenigstens eine erste Strahlungsquelle (42) aufweist, welche Wärmestrahlung abgibt sowie wenigstens eine Reflektoreinrichtung (50), welche wenigstens einen Anteil der von der Strahlungsquelle (50) abgegebenen Wärmestrahlung in Richtung der Kunststoffvorformlinge (10) reflektiert, wobei die Reflektoreinrichtung (50) einen ersten Abschnitt (52) mit einem im Wesentlichen parabelförmig gekrümmten Verlauf aufweist, **dadurch gekennzeichnet, dass** die Reflektoreinrichtung (50) einen zweiten Abschnitt (54, 56) mit einem gekrümmten Verlauf aufweist, dessen Krümmungsverlauf sich von dem Krümmungsverlauf des ersten Abschnitts (52) unterscheidet.

2. Vorrichtung nach Anspruch 1,
**dadurch gekennzeichnet, dass**
der erste Abschnitt (52) näher an einer Wandung der Kunststoffvorformlinge (10) angeordnet ist, als der zweite Abschnitt (54, 56).

3. Vorrichtung (1) nach Anspruch 1,
**dadurch gekennzeichnet, dass**
die Transporteinrichtung (2) derart ausgebildet ist, dass sie die Kunststoffvorformlinge (10) mit deren Mündung (10a) nach oben transportiert.

4. Vorrichtung (1) nach wenigstens einem der vorangegangenen Ansprüche,
**dadurch gekennzeichnet, dass**
die Erwärmungseinrichtung (4) eine zweite Strahlungsquelle (46) aufweist, die in der Längsrichtung der zu erwärmenden Kunststoffvorformlinge (10) versetzt zu der ersten Strahlungsquelle angeordnet ist.

5. Vorrichtung (1) nach Anspruch 4,
**dadurch gekennzeichnet, dass**
die Erwärmungseinrichtung eine zweite Reflektoreinrichtung aufweist, welche wenigstens einen Anteil der von der zweiten Strahlungsquelle (46) ausgehenden Wärmestrahlung auf die Kunststoffvorformlinge (10) reflektiert.

6. Vorrichtung (1) nach wenigstens einem der vorangegangenen Ansprüche,
**dadurch gekennzeichnet, dass**
die Strahlungsquelle (42) in einem Brennpunkt wenigstens eines der beiden Abschnitte (52) der Reflektoreinrichtung (50) angeordnet ist.

7. Vorrichtung (1) nach Anspruch 6,
**dadurch gekennzeichnet, dass**
die Strahlungsquelle auch in dem Brennpunkt des anderen der beiden Abschnitte (52, 54) angeordnet ist.

8. Vorrichtung (1) nach wenigstens einem der vorangegangenen Ansprüche,
**dadurch gekennzeichnet, dass**
der erste Abschnitt (52) die Gestalt einer Halbparabel aufweist.

9. Vorrichtung (1) nach wenigstens einem der vorangegangenen Ansprüche,
**dadurch gekennzeichnet, dass**
auch der zweite Abschnitt (54) die Gestalt einer Halbparabel aufweist.

10. Vorrichtung (1) nach wenigstens einem der vorangegangenen Ansprüche,
**dadurch gekennzeichnet, dass**
auch der zweite Abschnitt (54) einen parabelförmig gekrümmten Verlauf aufweist.

11. Vorrichtung (1) nach wenigstens einem der vorangegangenen Ansprüche,
**dadurch gekennzeichnet, dass**
die Reflektoreinrichtung (50) einen dritten Abschnitt (62) aufweist, dessen Krümmungsverlauf sich von den Krümmungsverläufen der ersten (52) und zweiten (54, 56) Abschnitte unterscheidet.

12. Verfahren zum Erwärmen von Kunststoffvorformlingen, wobei Kunststoffvorformlinge (10) mittels einer Transporteinrichtung (2) entlang eines Transportpfades transportiert werden und während dieses Transports von einer Erwärmungseinrichtung (4) erwärmt werden, wobei die Erwärmungseinrichtung wenigstens eine erste Strahlungsquelle (42) aufweist, welche Wärmestrahlung zum Erwärmen der Kunststoffvorformlinge (10) abgibt sowie wenigstens eine Reflektoreinrichtung, welche wenigstens einen Anteil der von der ersten Strahlungsquelle (42) abgegebenen Strahlung auf die Kunststoffvorformlinge (10) reflektiert, wobei die Reflektoreinrichtung (50) die Wärmestrahlung wenigstens mittels eines ersten Abschnitts (52) mit einem im Wesentlichen parabelförmig gekrümmten Verlauf reflektiert, **dadurch gekennzeichnet, dass** die Reflektoreinrichtung (50) die Wärmestrahlung mittels eines zweiten Abschnitts (54, 56) mit einem gekrümmten Verlauf, dessen Krümmungsverlauf sich von dem Krümmungsverlauf des ersten Abschnitts (52) unterscheidet, auf die Kunststoffvorformlinge (10) reflektiert.

## Claims

1. Apparatus (1) for heating plastic parisons (10), with a transport device (2) which transports the plastic parisons (10) along a predetermined transport path (T), and with at least one heating device (4), which is disposed stationary with respect to the transport path of the plastic parisons (10), wherein the heating device (4) has at least one first radiation source (42) which emits thermal radiation as well as at least one reflector device (50) which reflects at least a proportion of the thermal radiation emitted by the radiation source (42) in the direction of the plastic parisons (10), wherein the reflector device (50) has a first section (52) with a substantially parabolically curved configuration,
**characterised in that**
the reflector device (50) has a second section (54, 56) with a curved configuration, of which the curvature progression differs from the curvature progression of the first section (52).

2. Apparatus (1) according to claim 1,
**characterised in that**
the first section (52) is disposed nearer to a wall of the plastic parisons (10) than the second section (54, 56).

3. Apparatus (1) according to claim 1,
**characterised in that**
the transport device (2) is constructed in such a way that it transports the plastic parisons (10) with the mouth (10a) at the top.

4. Apparatus (1) according to at least one of the preceding claims,
**characterised in that**
the heating device (4) has a second radiation source (46) which is disposed offset with respect to the first radiation source in the longitudinal direction of the plastic parisons (10) to be heated.

5. Apparatus (1) according to claim 4,
**characterised in that**
the heating device has a second reflector device which reflects at least a proportion of the thermal radiation emanating from the second radiation source (46) onto the plastic parisons (10).

6. Apparatus (1) according to at least one of the preceding claims,
**characterised in that**
the radiation source (42) is disposed in a focal point of at least one of the two sections (52) of the reflector device (50).

7. Apparatus (1) according to claim 6,
**characterised in that**
the radiation source is also disposed in the focal point of the other of the two sections (52, 54).

8. Apparatus (1) according to at least one of the preceding claims,
**characterised in that**
the first section (52) has the configuration of a semiparabola.

9. Apparatus (1) according to at least one of the preceding claims,
**characterised in that**
also the second section (54) has the configuration of a semiparabola.

10. Apparatus (1) according to at least one of the preceding claims,
**characterised in that**
the second section (54) also has a parabolically curved configuration.

11. Apparatus (1) according to at least one of the preceding claims,
**characterised in that**
the reflector device (50) has a third section (62) of which the curvature progression differs from the curvature progressions of the first (52) and second (54, 56) sections.

12. Method for heating plastic parisons, wherein plastic parisons (10) are transported by means of a transport device (2) along a transport path and are heated by a heating device (4) during this transport, wherein the heating device has at least one first radiation source (42) which emits thermal radiation for heating the plastic parisons (10) as well as at least one reflector device which reflects at least a proportion of the radiation emitted by the first radiation source (42) onto the plastic parisons (10), wherein the reflector device (50) reflects the thermal radiation of at least one first section (52) with a substantially parabolically curved configuration,
**characterised in that**
the reflector device (50) reflects the thermal radiation of a second section (54, 56) with a curved configuration, of which the curvature progression differs from the curvature progression of the first section (52), onto the plastic parisons (10).

## Revendications

1. Dispositif (1) pour le chauffage de préformes en matière plastique (10), comprenant un moyen de transport (2) convoyant les préformes en matière plastique (10) le long d'un chemin de transport (T) défini, et comprenant au moins un moyen de chauffage (4) fixe par rapport au chemin de transport des préformes en matière plastique (10), dans lequel ledit moyen de chauffage (4) comporte au moins une première source de rayonnement (42) diffusant un rayonnement thermique ainsi qu'au moins un réflecteur (50) réfléchissant au moins une partie du rayonnement thermique diffusé par la source de rayonnement (50) dans la direction des préformes en matière plastique (10), dans lequel le réflecteur (50) présente un premier segment (52) ayant un profil incurvé sensiblement parabolique,
**caractérisé en ce que**
le réflecteur (50) présente un deuxième segment (54, 56) ayant un profil incurvé, ledit profil incurvé se distinguant du profil incurvé du premier segment (52).

2. Dispositif selon la revendication 1,
**caractérisé en ce que**
le premier segment (52) est plus proche de la paroi des préformes en matière plastique (10) que le deuxième segment (54, 56).

3. Dispositif (1) selon la revendication 1,
**caractérisé en ce que**
le moyen de transport (2) est prévu pour transporter les préformes en matière plastique (10) par leur embouchure (10a) vers le haut.

4. Dispositif (1) selon au moins une des revendications précédentes,
**caractérisé en ce que**
le moyen de chauffage (4) comporte une deuxième source de rayonnement (46), laquelle est décalée de la première source de rayonnement dans le sens de la longueur des préformes en matière plastique (10) à chauffer.

5. Dispositif (1) selon la revendication 4,
**caractérisé en ce que**
le moyen de chauffage comporte un deuxième réflecteur, lequel réfléchit au moins une partie du rayonnement thermique provenant de la deuxième source de rayonnement (46) vers les préformes en matière plastique (10).

6. Dispositif (1) selon au moins une des revendications précédentes,
**caractérisé en ce que**
la source de rayonnement (42) est située sur un point focal d'au moins un des deux segments (52) du réflecteur (50).

7. Dispositif (1) selon la revendication 6,
**caractérisé en ce que**
la source de rayonnement est également située sur le point focal de l'autre des deux segments (52, 54).

8. Dispositif (1) selon au moins une des revendications précédentes,
**caractérisé en ce que**
le premier segment (52) a la forme d'une demi-parabole.

9. Dispositif (1) selon au moins une des revendications précédentes,
**caractérisé en ce que**
le deuxième segment (54) a également la forme d'une demi-parabole.

10. Dispositif (1) selon au moins une des revendications précédentes,
**caractérisé en ce que**
le deuxième segment (54) a également un profil incurvé parabolique.

11. Dispositif (1) selon au moins une des revendications précédentes,
**caractérisé en ce que**
le réflecteur (50) présente un troisième segment (62) dont le profil incurvé se distingue des profils incurvés du premier (52) et du deuxième (54, 56) segments.

12. Procédé de chauffage de préformes en matière plastique, dans lequel des préformes en matière plastique (10) sont convoyées le long d'un chemin de transport au moyen d'un dispositif de transport (2) et chauffées par un dispositif de chauffage (4) pendant ce transport, dans lequel le dispositif de chauffage comporte au moins une première source de rayonnement (42) diffusant un rayonnement thermique pour le chauffage des préformes en matière plastique (10) ainsi qu'au moins un dispositif réflecteur réfléchissant au moins une partie du rayonnement diffusé par la première source de rayonnement (50) vers les préformes en matière plastique (10), dans lequel le dispositif réflecteur (50) réfléchit le rayonnement thermique au moins au moyen d'un premier segment (52) ayant un profil incurvé sensiblement parabolique,
**caractérisé en ce que**
le dispositif réflecteur (50) réfléchit le rayonnement thermique vers les préformes en matière plastique (10) au moyen d'un deuxième segment (54, 56) à profil incurvé, ledit profil incurvé se distinguant du profil incurvé du premier segment (52).
